(19) Europäisches Patentamt / European Patent Office / Office européen des brevets

(11) **EP 4 372 763 A1**

(12) **EUROPEAN PATENT APPLICATION**
published in accordance with Art. 153(4) EPC

(43) Date of publication:
**22.05.2024 Bulletin 2024/21**

(21) Application number: **22842129.3**

(22) Date of filing: **12.07.2022**

(51) International Patent Classification (IPC):
*H01B 1/06* (2006.01)      *H01G 9/028* (2006.01)
*H01G 9/035* (2006.01)      *H01G 11/56* (2013.01)
*H01G 11/58* (2013.01)      *H01M 4/62* (2006.01)
*H01M 6/18* (2006.01)      *H01M 10/052* (2010.01)
*H01M 10/056* (2010.01)      *H01M 12/08* (2006.01)

(52) Cooperative Patent Classification (CPC):
**H01B 1/06; H01G 9/028; H01G 9/035; H01G 11/56; H01G 11/58; H01M 4/62; H01M 6/18; H01M 10/052; H01M 10/056; H01M 12/08;** Y02E 60/10

(86) International application number:
**PCT/JP2022/027465**

(87) International publication number:
**WO 2023/286786 (19.01.2023 Gazette 2023/03)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **15.07.2021 JP 2021116926**

(71) Applicant: Niterra Co., Ltd.
**Nagoya-shi, Aichi 461-0005 (JP)**

(72) Inventors:
• **OMORI, Koji**
  **Nagoya-shi, Aichi 461-0005 (JP)**
• **KONDO, Ayako**
  **Nagoya-shi, Aichi 461-0005 (JP)**

(74) Representative: **Grünecker Patent- und Rechtsanwälte PartG mbB Leopoldstraße 4 80802 München (DE)**

(54) **ELECTROLYTE COMPOSITION AND SECONDARY BATTERY**

(57)      The present invention provides: an electrolyte composition (14) which is capable of reducing move of an electrolyte solution; and a secondary battery (10). This electrolyte composition contains a solid electrolyte (18) which has lithium ion conductivity, an electrolyte solution (21) into which a lithium salt is dissolved, and a granular polymer (22) which is dispersed in the electrolyte solution. This secondary battery sequentially comprises a positive electrode (11), an electrolyte layer (14) and a negative electrode (15); and at least one of the positive electrode, the electrolyte layer and the negative electrode contains an electrolyte composition that contains a solid electrolyte which has lithium ion conductivity, an electrolyte solution into which a lithium salt is dissolved, and a granular polymer which is dispersed in the electrolyte solution.

FIG. 1

## Description

TECHNICAL FIELD

The present invention relates to an electrolyte composition and to a secondary battery.

BACKGROUND ART

In the related art, Patent Literature 1 discloses a secondary battery containing a solid electrolyte which has lithium ion conductivity. The technique disclosed in Patent Literature 1 is based on additional incorporation, into the battery, of an electrolytic solution containing a lithium salt dissolved therein, to thereby enhance ion conductivity by virtue of the presence of the electrolytic solution at the intergranular interface of the solid electrolyte.

CITATION LIST

PATENT LITERATURE

Patent Literature 1: JP6682708B

SUMMARY OF INVENTION

TECHNICAL PROBLEM

In the related art, when external force is applied to a secondary battery, or when the temperature around a secondary battery increases, the electrolytic solution of the battery moves, to thereby easily provide an electrolytic solution-deficient portion in the solid electrolyte. Once such an electrolytic solution-deficient portion is provided, the contact area between the electrolytic solution and particles of the electrolyte decreases. In such a case, the internal resistance of the secondary battery may possibly increase.

The present invention has been conceived to solve the above problem. Thus, an object of the present invention is to provide an electrolyte composition and a secondary battery, each achieving suppressed movement of electrolytic solution.

SOLUTION TO PROBLEM

In order to attain the above object, the present invention provides an electrolyte composition which contains a solid electrolyte having lithium ion conductivity; an electrolytic solution containing a lithium salt dissolved therein; and polymer particles (hereinafter may also be referred to as a "particulate polymer") dispersed in the electrolytic solution.

The present invention also provides a secondary battery having a positive electrode, an electrolyte layer, and a negative electrode, in that sequence. At least one member of the positive electrode, the electrolyte layer, and the negative electrode contains an electrolyte composition which contains a solid electrolyte having lithium ion conductivity; an electrolytic solution containing a lithium salt dissolved therein; and a particulate polymer dispersed in the electrolytic solution.

ADVANTAGEOUS EFFECTS OF INVENTION

In the electrolyte composition of the present invention, polymer particles are dispersed in the electrolytic solution. Thus, undesired movement of the electrolytic solution can be suppressed. In the secondary battery containing the electrolyte composition, the polymer particles reduce movement of the electrolytic solution, whereby an increase in internal resistance can be suppressed.

BRIEF DESCRIPTION OF DRAWINGS

[FIG. 1] A cross-section of a secondary battery according to an embodiment.
[FIG. 2] A partial cross-sectional view of an electrolyte layer, which is an expanded representation of a part of FIG. 1 represented by II.
[FIG. 3A] A cross-section of a polymer.
[FIG. 3B] A cross-section of another polymer.

DESCRIPTION OF EMBODIMENTS

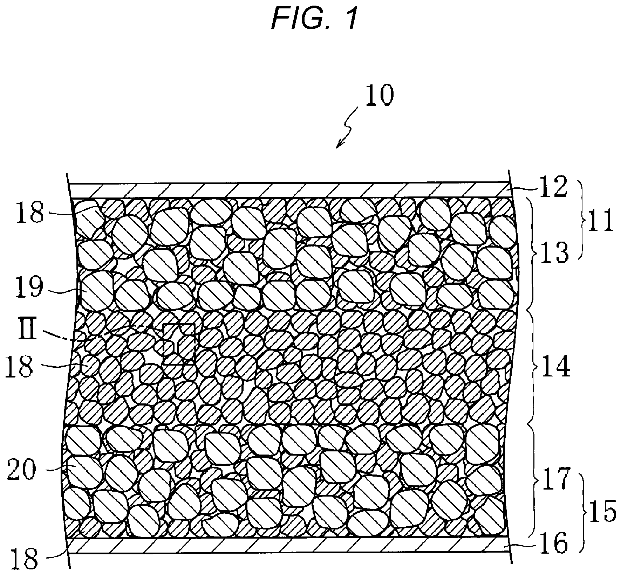

Hereinafter, a preferred embodiment of the present invention will be described with reference to the attached drawings. FIG. 1 is a schematic cross-sectional view of a secondary battery 10 according to an embodiment. The secondary battery 10 of the embodiment is a lithium ion solid battery in which power generation elements are formed of a solid. The concept "power generation elements formed of a solid" refers to the body of each power generation element being formed of a solid, and does not exclude a mode, for example, one in which a body is impregnated with a liquid.

As shown in FIG. 1, the secondary battery 10 includes, from top to bottom, a positive electrode 11, an electrolyte layer 14, and a negative electrode 15. The positive electrode 11, the electrolyte layer 14, and the negative electrode 15 are built in a case (not illustrated).

The positive electrode 11 includes a composite layer 13 and a current-collecting layer 12 stacked thereon. The current-collecting layer 12 is a member having an electrical conductivity. Examples of the material of the current-collecting layer 12 include metals selected from among Ni, Ti, Fe, and Al; alloys each containing two or more of such metals; stainless steel; and carbon material.

The composite layer 13 is formed of an electrolyte composition (describe below). The electrolyte composition contains a solid electrolyte 18 and an active material 19. For lowering the electrical resistance of the composite layer 13, the composite layer 13 may contain a conducting aid. Examples of the conducting aid include carbon black, acetylene black, Ketjen black, carbon fiber, Ni, Pt, and Ag.

Examples of the active material 19 include a metal oxide in which the metal includes a transition metal. Examples of the metal oxide in which the metal includes a transition metal include a metal oxide in which the metal includes Li and at least one species selected from among Mn, Co, Ni, Fe, Cr, and V. Specific examples of the metal oxide in which the metal includes a transition metal include $LiCoO_2$, $LiNi_{0.8}Co_{0.15}Al_{0.05}O_2$, $LiMn_2O_4$, $LiNiVO_4$, $LiNi_{0.5}Mn_{1.5}O_4$, $LiNi_{1/3}Mn_{1/3}Co_{1/3}O_4$, and $LiFePO_4$.

In order to suppress reaction between the active material 19 and the solid electrolyte 18, a coating layer may be provided on the active material 19. Examples of the coating layer include $Al_2O_3$, $ZrO_2$, $LiNbO_3$, $Li_4Ti_5O_{12}$, $LiTaO_3$ $LiNbO_3$, $LiAlO_2$, $Li_2ZrO_3$, $Li_2WO_4$, $Li_2TiO_3$, $Li_2B_4O_7$, $Li_3PO_4$, and $Li_2MoO_4$.

The negative electrode 15 is formed of a composite layer 17 and a current-collecting layer 16 stacked thereon. The current-collecting layer 16 is a member having an electrical conductivity. Examples of the material of the current-collecting layer 16 include metals selected from among Ni, Ti, Fe, Cu, and Si; alloys each containing two or more of such metals; stainless steel; and carbon material.

The composite layer 17 is formed of an electrolyte composition (describe below). The electrolyte composition contains the solid electrolyte 18 and an active material 20. For lowering the electrical resistance of the composite layer 17, the composite layer 17 may contain a conducting aid. Examples of the conducting aid include carbon black, acetylene black, Ketjen black, carbon fiber, Ni, Pt, and Ag.

Examples of the active material 20 include Li, Li-Al alloy, $Li_4Ti_5O_{12}$, graphite, In, Si, Si-Li alloy, and SiO.

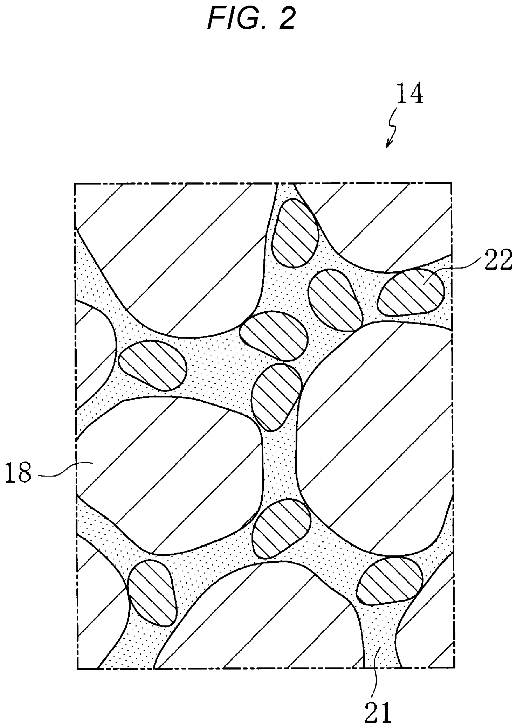

FIG. 2 is a partial cross-sectional view of the electrolyte layer 14, which is an expanded representation of a part of FIG. 1 represented by II. The electrolyte layer 14 is formed of an electrolyte composition. The electrolyte composition contains the solid electrolyte 18; an electrolytic solution 21 containing a lithium salt dissolved therein; and polymer particles 22 dispersed in the electrolytic solution 21. Similarly, the electrolyte composition for forming the composite layer 13 of the positive electrode 11 and the electrolyte composition for forming the composite layer 17 of the negative electrode 15 contain the electrolytic solution 21 and the polymer 22.

The solid electrolyte 18 is a solid material which can achieve conduction of lithium ions. The solid electrolyte 18 contains one or more species selected from among oxides, sulfides, hydrides, and organic compounds. Among them, the solid electrolyte 18 is preferably formed of an oxide, since the oxide generates no toxic gas when exposed to air. The solid electrolyte 18 may be a composite substance, for example, an oxide having a surface on which a hydride is bonded.

Examples of the solid electrolyte 18 of an oxide type include an oxide having a NASICON-type structure, an oxide having a perovskite structure, and an oxide having a garnet-type structure. Examples of the oxide having a NASICON-type structure include oxides each containing at least Li, M (M represents one more elements selected from Ti, Zr, and Ge), and P; e.g., $Li(Al,Ti)_2(PO_4)_3$ and $Li(Al,Ge)_2(PO_4)_3$. Examples of the oxide having a perovskite structure include oxides each at least containing Li, Ti, and La; e.g., $La_{2/3}-xLi_{3x}TiO_3$.

The standard composition of the garnet-type structure oxide is $Li_5La_3M_2O_{12}$ (M=Nb, Ta). The solid electrolyte 18 formed of the garnet-type structure oxide is preferably one containing Li, La, Zr, and O. Examples of the solid electrolyte 18 include $Li_7La_3Zr_2O_{12}$, corresponding to the standard composition in which the hexavalent cation M is substituted by a tetravalent cation.

In addition to Li, La, and Zr, the solid electrolyte 18 may further contain at least one element selected from the group consisting of Mg, Al, Si, Ca, Ti, V, Ga, Sr, Y, Nb, Sn, Sb, Ba, Hf, Ta, W, Bi, Rb, and lanthanoid (except for La). Examples of such an electrolyte include $Li_6La_3Zr_{1.5}W_{0.5}O_{12}$, $Li_{6.15}La_3Zr_{1.75}Ta_{0.25}Al_{0.2}O_{12}$, $Li_{6.15}La_3Zr_{1.75}Ta_{0.25}Ga_{0.2}O_{12}$, $Li_{6.25}La_3Zr_2Ga_{0.25}O_{12}$, $Li_{6.4}La_3Zr_{1.4}Ta_{0.6}O_{12}$, $Li_{6.5}La_3Zr_{1.75}Te_{0.25}O_{12}$, $Li_{6.75}La_3Zr_{1.75}Nb_{0.25}O_{12}$, $Li_{6.9}La_3Zr_{1.675}Ta_{0.289}Bi_{0.036}O_{12}$, $Li_{6.46}Ga_{0.23}La_3Zr_{1.85}Y_{0.15}O_{12}$, $Li_{6.8}La_{2.95}Ca_{0.05}Zr_{1.75}Nb_{0.25}O_{12}$, $Li_{7.05}La_{3.00}Zr_{1.95}Gd_{0.05}O_{12}$, and $Li_{6.20}Ba_{0.30}La_{2.95}Rb_{0.05}Zr_2O_{12}$.

The solid electrolyte 18 preferably contains at least one of Mg and element A (A represents at least one element selected from the group consisting of Ca, Sr, and Ba), and satisfies all the following conditions (1) to (3) regarding mole proportions of the elements. Alternatively, the solid electrolyte 18 preferably contains both Mg and element A, and satisfies all the following conditions (4) to (6) regarding mole proportions of the elements. From the viewpoint of elevating the ion conductivity of the solid electrolyte 18, element A is preferably Sr.

$$(1)\ 1.33 \leq Li/(La+A) \leq 3$$

$$(2)\ 0 \leq Mg/(La+A) \leq 0.5$$

$$(3)\ 0 \leq A/(La+A) \leq 0.67$$

$$(4)\ 2.0 \leq Li/(La+A) \leq 2.5$$

$$(5)\ 0.01 \leq Mg/(La+A) \leq 0.14$$

$$(6)\ 0.04 \leq A/(La+A) \leq 0.17$$

Examples of the sulfide-type solid electrolyte 18 include glass or ceramic materials such as those of a crystalline thio-LISICON type, an $Li_{10}GeP_2S_{12}$ type, an argyrodite type, an $Li_7P_3S_{11}$, and an $Li_2S\text{-}P_2S_5$. Examples of the hydride-type solid electrolyte 18 include a solid solution of $LiBH_4$ with a lithium halide compound (LiI, LiBr, LiCl) or a lithium amide ($LiNH_2$). Examples of the organic solid electrolyte 18 include polyethylene oxide, polypropylene oxide, and polyacrylonitrile.

In the electrolytic solution 21, a lithium salt is dissolved in the solvent. The lithium salt is a compound for use in donation and acceptance of lithium ions between the positive electrode layer 11 and the negative electrode layer 15. Examples of the anion of the lithium salt include halide ions (e.g., I$^-$, Cl$^-$, and Br$^-$), SCN$^-$, $BF_4^-$, $BF_3(CF_3)^-$, $BF_3(C_2F_5)^-$, $PF_6^-$, $ClO_4^-$, $SbF_6^-$, $N(SO_2F)_2^-$, $N(SO_2CF_3)_2^-$, $N(SO_2C_2F_5)_2^-$, $B(C_6H_5)_4^-$, $B(O_2C_2H_4)_2^-$, $C(SO_2F)_3^-$, $C(SO_2CF_3)_3^-$, $CF_3COO^-$, $CF_3SO_2O^-$, $C_6F_5SO_2O^-$, and $B(O_2C_2O_2)_2^-$.

In some cases, $N(SO_2F)_2^-$ may be referred to as bis(fluorosulfonyl)imide anion (abbreviated as [FSI]$^-$); $N(SO_2CF_3)_2^-$ may be referred to as bis(trifluoromethanesulfonyl)imide anion (abbreviated as [TFSI]$^-$); bisoxalatoborate anion may be referred to as $B(O_2C_2O_2)_2^-$ (abbreviated as [BOB]$^-$); and tris(fluorosulfonyl)carbanion may be referred to as $C(SO_2F)_3^-$ (abbreviated as [f3C]$^-$).

An example of the lithium salt is at least one species selected from the group consisting of $LiPF_6$, $LiBF_4$, Li[FSI], Li[TFSI], Li[f3C], Li[BOB], $LiClO_4$, $LiBF_3(CF_3)$, $LiBF_3(C_2F_5)$, $LiBF_3(C_3F_7)$, $LiBF_3(C_4F_9)$, $LiC(SO_2CF_3)_3$, $LiCF_3SO_2O$, $LiCF_3COO$, or LiRCOO (R represents a C1 to C4 alkyl group, a phenyl group, or a naphthyl group).

No particular limitation is imposed on the solvent of the electrolytic solution 21, so long as the solvent is liquid within a temperature range ensuring satisfactory use of the secondary battery 10. Examples of the solvent include a carbonate ester, an aliphatic carboxylate ester, a phosphate ester, γ-lactone, ether, nitrile, sulfolane, dimethyl sulfoxide, a fluorous solvent, and an ionic liquid. These solvents may be used in combination.

Examples of the carbonate ester include cyclic carbonate esters such as propylene carbonate, ethylene carbonate, butylene carbonate, vinylene carbonate, vinylethylene carbonate, and fluoroethylene carbonate; and chain carbonate esters such as dimethyl carbonate, diethyl carbonate, and ethyl methyl carbonate.

Examples of the aliphatic carboxylate ester include methyl formate, methyl acetate, and ethyl propionate. Examples of the phosphate ester include trimethyl phosphate. Examples of the γ-lactone include γ-butyrolactone. Examples of the ether include chain ethers such as 1,3-dioxaolane and 1,2-dialkoxyethane; and cyclic ethers such as tetrahydrofuran and 2-methyltetrahydrofuran. Examples of the nitrile include acetonitrile and propionitrile. Examples of the fluorous solvent include a hydrocarbon compound in which a hydrogen atom is substituted by a fluorine atom, and a derivative thereof.

The ionic liquid is a compound formed of a cation and an anion, and assumes liquid at ambient temperature and atmospheric pressure. When the solvent of the electrolytic solution is an ionic liquid, flame resistance can be enhanced. The ionic liquid preferably has a cationic component which is one or more species selected from the group consisting of ammonium, imidazolium, pyrrolidinium, and piperidinium.

No particular limitation is imposed on the anion component of the ionic liquid. Examples of the anion component include inorganic anions such as $BF_4^-$ and $N(SO_2F)_2^-$; and organic anions such as $B(C_6H_5)_4^-$, $CH_3SO_3^-$, $CF_3SO_3^-$, $N(SO_2CF_3)_2^-$, and $N(SO_2C_4F_9)_2^-$. The anion component of the ionic liquid is preferably the same as that of the lithium salt, since coordination of the anion to lithium ions contained in the electrolytic solution 21 (i.e., interaction) can be easily controlled.

Examples of the ionic liquid include N,N-diethyl-N-methyl-N-(2-methoxyethyl)ammonium bis(fluorosulfonyl)imide (DEME-FSI), N,N-diethyl-N-methyl-N-(2-methoxyethyl)ammonium bis(trifluoromethanesulfonyl)imide (DEME-TFSI), 1-ethyl-3-methylimidazolium bis(fluorosulfonyl)imide (EMI-FSI), 1-ethyl-3-methylimidazolium bis(trifluoromethanesulfonyl)imide (EMI-TFSI), N-butyl-N-methylpiperidinium bis(fluorosulfonyl)imide, N-methyl-N-propylpiperidinium bis(trifluoromethanesulfonyl)imide, N-methyl-N-propylpyrrolidinium bis(fluorosulfonyl)imide (P13-FSI), and N-methyl-N-propylpyrrolidinium bis(trifluoromethanesulfonyl)imide (P13-TFSI).

The physical properties and functions of the electrolytic solution 21 are determined by the type and salt concentration in relation to the lithium salt and the solvent. In order to secure lithium ion conductivity, the salt concentration (i.e., lithium ion concentration) of the electrolytic solution is, for example, 0.5 to 5 mol/dm$^3$.

In the electrolyte layer 14 (electrolyte composition), the relative amount (vol. %) of the electrolytic solution 21 with respect to the total amount of the solid electrolyte 18 and the electrolytic solution 21 is preferably 50 vol.% or less (excluding 0 vol. %). That is, the ratio; solid electrolyte : electrolytic solution is (100-X) : X (0<X≤50). Adjustment of the relative amount is conducted in order to ensure ion conductivity by the ionic liquid 21 present between particles of the solid electrolyte 18 and to prevent leakage of the electrolytic solution 21.

The amount of the electrolytic solution 21 (vol. %) is determined in the following manner. Specifically, the electrolyte layer 14 is frozen or embedded in a 4-function epoxy resin or the like. Then, a vision field (×5,000) is selected at random from a cross-section of the electrolyte layer 14 (i.e., a cross-section obtained through polishing or irradiating with a focused ion beam (FIB)). The vision field is analyzed under an SEM equipped with an energy-dispersive X-ray spectrometer (EDS). In the analysis, the distributional feature of elements is specified, and the contrast of a reflective electron image is analyzed, to thereby determine the areas corresponding to the solid electrolyte 18 and the electrolytic solution 21. The ratio of the cross-sectional area of the electrolytic solution 21 to the cross-section of the electrolyte layer 14 is considered to be a volume ratio of the electrolytic solution 21 to the electrolyte layer 14. Thus, the relative amount (vol. %) of electrolytic solution 21 is determined.

The polymer 22 is a compound (polymer) in the form of particles dispersed in the electrolytic solution 21. Examples of the material of the polymer 22 include polyethylene, polypropylene, poly(ethylene terephthalate), polystyrene, polyamide, poly(vinyl alcohol), ethylene-vinyl alcohol copolymer, poly(vinylidene chloride), polyacrylonitrile, polycarbonate, and silicone. The solvent of the electrolytic solution 21 is selected from solvents which cannot dissolve the polymer 22.

Particles of the polymer 22 are dispersed in the electrolytic solution 21 so as to surround the solid electrolyte 18. As a result, the space between particles of the solid electrolyte 18 are partially filled with the polymer 22. Thus, the tissue containing the solid electrolyte 18, the electrolytic solution 21, and the polymer 22 readily becomes dense, whereby a decrease in the contact area between the solid electrolyte 18 and the electrolytic solution 21 can be suppressed, to thereby secure the ion conductivity of the electrolyte layer 14. In a more specific case, the solid electrolyte 18 formed of an oxide generally has intergranular resistance. However, by virtue of the presence of the electrolytic solution 21 in which the polymer 22 is dispersed is present between particles of the solid electrolyte 18, intergranular resistance can be reduced.

Also, since the space between particles of the solid electrolyte 18 is partially filled with the polymer 22, transfer of the electrolytic solution 21 present between the particles of the solid electrolyte 18 is impeded. Since the movement of the electrolytic solution 21 is impeded, even when external force is applied to the electrolyte layer 14, or even when the temperature around the electrolyte layer 14 increases, partial deficiency in the electrolytic solution 21 between particles of the solid electrolyte 18, or leakage of the electrolytic solution 21 can be prevented. Also, since a decrease in surface area between the solid electrolyte 18 and the electrolytic solution 21 can be prevented, a rise in internal resistance of the electrolyte layer 14 can be prevented.

Meanwhile, particles of the polymer 22 contained in the composite layer 13 of the positive electrode 11 or in the composite layer 17 of the negative electrode 15 also is dispersed in the electrolytic solution 21. In some cases, the polymer 22 is present between particles of the solid electrolyte 18, between the solid electrolyte 18 and the active material 19 or 20, or between particles of the active materials 19 or 20. Since the polymer 22 can reduce movement of the electrolytic solution 21, a decrease in the surface area of the electrolytic solution 21 in contact with the solid electrolyte 18 or the active material 19 or 20 can be prevented. As a result, ion conduction between particles of the solid electrolyte 18, ion conduction between the solid electrolyte 18 and the active material 19 or 20, and ion conduction between particles of the active material 19 or 20 can be secured.

In the secondary battery 10 in which energy storage is achieved through insertion/elimination of lithium ions to and from the active material 19 or 20, the volume of the active material 19 or 20 varies concomitantly with a charge/discharge process. Since the polymer 22 is present between the solid electrolyte 18 and the active material 19 or 20, or between the particles of the active material 19 or 20, the change in volume of the active material 19 or 20 upon a charge/discharge process can be buffered by the polymer 22. As a result, damage or other failures of the active material 19 and 20 can be mitigated, and the structure of the composite layer 13 or 17 can be maintained.

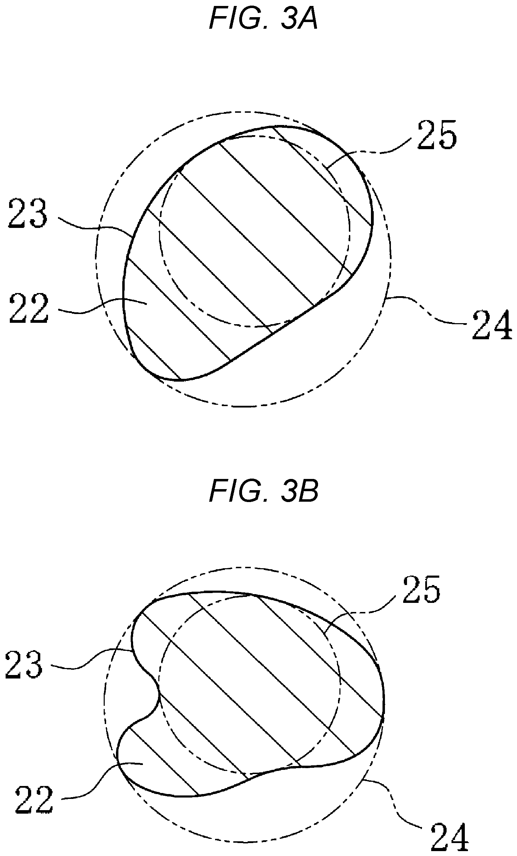

FIG. 3A is a cross-section of one species of the polymer 22, and FIG. 3B is a cross-section of another species of the polymer 22. The expression " the polymer 22 is in the form of particles" refers to the case where a predominant amount of the particles of the polymer 22 have a cross-section almost equivalent to a circle (i.e., the particle is substantially spherical). Whether or not the particle of the polymer 22 is spherical is determined through the following procedure. Firstly, the interface between the positive electrode 11 (see FIG. 1) and the electrolyte layer 14, or the interface between the negative electrode 15 and the electrolyte layer 14 is cut along the direction orthogonal to the interface. The image of the cut surface including the polymer 22 is taken under an SEM. The imaging is carried out within a square area (100 $\mu$m $\times$ 100 $\mu$m) including a target object observed under the SEM.

In the case where the thickness of the electrolyte layer 14 is less than 100 $\mu$m, thereby failing to set the square area (100 $\mu$m $\times$ 100 $\mu$m) in the cross-section of the electrolyte layer 14, the square area in the cross-section of the electrolyte layer 14 may be enlarged to include an image including the polymer 22 in the cross-section of the composite layer 13 or 17. Notably, in the case of taking an cross-sectional image of each of the electrolyte layer 14 and the composite layers 13 and 17, when the thickness of each of the electrolyte layer 14 and the composite layers 13 and 17 is less than 100 $\mu$m, a maximum shorter side of the image taking area is provided along the thickness direction of the object, and a longer side of the area is provided along the interfacial direction, so as to gain an area of 10,000 $\mu$m$^2$. Through the aforementioned procedure, an image of 10,000 $\mu$m$^2$ including the target object is taken.

After taking the cross-sectional image of interest, as shown in FIGs. 3A and 3B, a circle 24 which circumscribes a contour 23 of a particle of the polymer 22 and which has the minimum area and a circle 25 which inscribes the contour 23 and which has the maximum area are drawn with respect to each particle of the polymer 22 through image processing. The diameter Do of the circle 24 and the diameter Di of the circle 25 are determined. In the case where the ratio of the number of the particles of the polymer 22 satisfying the condition: (Do-Di)/2<Di, to the total number of the particles of the polymer 22 in the image is 80% or more, a predominant portion of the particles of the polymer 22 have a cross-section almost equivalent to a circle (i.e., the particles are substantially spherical). In such a case, the particles of the polymer 22 are evaluated as spherical.

The polymer 22 may also be identified through Fourier transfer infrared spectroscopy (FTIR) or a microscopic-infrared spectroscopy, in which microscopy is combined with FTIR. Alternatively, the polymer 22 is sampled from an object, and the sample is analyzed. Yet alternatively, analysis may be performed by means of a nuclear magnetic resonance (NMR) apparatus.

The size of a particle of the polymer 22 is defined as a diameter of a circle having an area equal to cross-sectional area of a particle of the polymer 22 (i.e., a circle equivalent diameter) which has been determined through image analysis of particles of the polymer 22 observed in a cross-section. The size of a particle of the solid electrolyte 18 is defined as a circle-equivalent diameter of the particle of the solid electrolyte 18 which has been determined through image analysis of particles of the solid electrolyte 18 observed in a cross-section. The maximum size of a particle of the polymer 22 is smaller than that of the maximum size of a particle of the solid electrolyte 18. As a result, the function of the polymer 22 for suppressing the movement of the electrolytic solution 21 can be further enhanced.

The polymer 22 content of the solid electrolyte 18 is preferably 5 to 30 vol. %. Adjustment of the polymer content is performed in order to avoid excessive suppression of ion conduction by the polymer 22 present between particles of the solid electrolyte 18, the polymer 22 present between the solid electrolyte 18 and the active material 19 or 20, and the polymer 22 present between particles of the active material 19 or 20, and to secure a dense structure involving the solid electrolyte 18, the electrolytic solution 21, and the polymer 22.

The polymer 22 is preferably formed of silicone, which has excellent heat resistance and chemical stability and exhibits a wide potential window. Silicone generally refers to a polymer of an organic silicon compound (i.e., organopolysiloxane) having a skeleton of -Si($R_1R_2$)-O- in which an organic group is bounded to a siloxane bond (Si-O). Examples of the organic group $R_1R_2$ include functional groups such as methyl, vinyl, phenyl, alkoxy, and hydroxyl. Depending on its structure and properties, silicone is categorized into silicone rubber and silicone resin.

Silicone rubber has a variety of organic groups and rubber elasticity. A typical example of silicon rubber has a cross-linked structure of dimethylpolysiloxane. Silicone rubber exhibits rubber elasticity at -50°C to 250°C. An example of the structure in which linear-chain dimethylpolysiloxane units are cross-linked is a block of linear polyorganosiloxane represented by -($R^3_2$SiO)$_a$-.

$R^3$ is selected from one or more C1 to C20 monovalent organic groups selected from, for example, alkyl groups such as methyl, ethyl, propyl, butyl, pentyl, hexyl, heptyl, octyl, decyl, dodecyl, tetradecyl, hexadecyl, and octadecyl; cycloalkyl groups such as cyclopentyl, cyclohexyl, and cyclooctyl; and aryl groups such as phenyl and tolyl, or is from a monovalent organic group which is derived from any of the above examples by substituting a part of C-bonded hydrogen atoms with a halogen atom. For securing the surface smoothness, the index "a" is, for example, 5 to 5,000, preferably 10 to 1,000.

Silicone resin has a large amount of 3-dimensional network structure having a structural unit of $R^3SiO_{3/2}$ or $R^3_2SiO_{2/2}$. $R^3$ is any of the same organic groups as described above. Silicone resin has particularly high heat resistance and does not swell in many solvents.

Examples of the mode of the polymer 22 include the entire body formed of silicone rubber, the entire body formed of silicone resin, and a composite of silicone rubber and silicone resin. An example of the composite is a silicone rubber body coated with a silicone resin. The body of the polymer 22 preferably has a silicone resin on the surface thereof. When compared with a polymer body having a silicone rubber surface, the polymer body having a silicone resin surface provides better dispersibility and a wider potential window. Examples of the mode of the body of the polymer 22 having a silicone resin surface include the entire body formed of silicone resin, and a silicone rubber body coated with silicone resin. A composite formed of a silicone rubber body coated with silicone resin is more preferred, since the silicone rubber exhibits elasticity.

Any of the electrolyte layer 14 and the composite layers 13 and 17 may contain a binder. The binder serves as a binding agent for the solid electrolyte 18 and the active materials 19 and 20. The binder and the electrolytic solution 21 may be present in a separate manner, or may be co-present to form a gel. No particular limitation is imposed on the binder, and a preferred binder has a potential window wider than that of the electrolytic solution 21. An example of the binder is a poly(vinylidene fluoride)-hexafluoropropylene copolymer. Further, any of the electrolyte layer 14 and the composite layers 13 and 17 may contain a solvent for dissolving the binder. Examples of the solvent include a carbonate ester, acetonitrile, and 1,2-dimethoxyethane.

When a binder is contained, the polymer 22 content of the binder is preferably 5 to 30 vol. %. Adjustment of the polymer content is carried out in order to prevent deterioration of the binding performance of the binder which would otherwise be caused by the polymer 22, and to secure elasticity of any of the electrolyte layer 14 and the composite layers 13 and 17. The binder content (vol. %) can be determined from the relative area of the binder in a cross-section of the electrolyte layer 14 or the composite layer 13 or 17. The relative area of the binder can be determined through image analysis based on SEM-EDS.

The secondary battery 10 is fabricated through, for example, the following procedure. Specifically, a lithium salt is dissolved in a solvent, to thereby prepare the electrolytic solution 21, which is then mixed with the solid electrolyte 18. In the resultant mixture, a solution of a binder is mixed with the mixture, to thereby form a slurry. The slurry is molded into a tape, which is then dried, to thereby yield a green sheet (electrolyte sheet) for yielding the electrolyte layer 14.

Then, the electrolytic solution 21 and the solid electrolyte 18 are mixed, and the active material 19 is added thereto. Separately, a solution of a binder is mixed with the polymer 22, to thereby prepare a slurry. The slurry is formed into a tape on the current-collecting layer 12 and then dried to form a green sheet (i.e., a positive electrode sheet) for providing the positive electrode 11.

Similarly, the electrolytic solution 21 and the solid electrolyte 18 are mixed, and the active material 20 is added thereto. Separately, a solution of a binder is mixed with the polymer 22, to thereby prepare a slurry. The slurry is formed into a tape on the current-collecting layer 16 and then dried to form a green sheet (i.e., a negative electrode sheet) for providing the negative electrode 15.

The electrolyte sheet, the positive electrode sheet, and the negative electrode sheet are cut into a shape of interest. The cut products thereof are stacked from the positive electrode sheet, the electrolyte sheet, and the negative electrode sheet in that sequence, and the stacked product is pressed to integrate the sheets. To each of the current-collecting layers 12 and 16, a terminal (not illustrated) is connected, and the product is built in a case (not illustrated), and the case is closed. Thus, a secondary battery 10 in which the positive electrode 11, the electrolyte layer 14, and the negative electrode 15 stacked in that sequence can be fabricated. In the secondary battery 10, the polymer 22 contained in any of the positive electrode 11, the electrolyte layer 14, and the negative electrode 15 can suppress the movement of the electrolytic solution 21. As a result, a rise in internal resistance can be reduced.

With reference to the above embodiment, the present invention has been described in detail. However, the present invention should not be limited to the aforementioned embodiment. Those skilled in the art can easily understand that the present invention may be modified in various manners, so long as such variations do not deviate from the scope and gist of the invention.

In the above-described embodiment, the secondary battery 10 is provided with the positive electrode 11 in which the composite layer 13 formed on one side of the current-collecting layer 12, and the negative electrode 15 in which the composite layer 17 formed on one side of the current-collecting layer 16. However, the embodiment is not limited to the above configuration. Needless to say, those skilled in the art can conceive application of, for example, the aforementioned elements of the above embodiment to a secondary battery provided with an electrode layer having the composite layer 13 and the composite layer 17 on respective surfaces of the current-collecting layer 12 (i.e., a bipolar electrode). By alternatingly stacking the bipolar electrode and the electrolyte layer 14, and putting the stacked product into a case (not illustrated), a secondary battery having a so-called bipolar structure can be fabricated.

In the above-described embodiment, all of the composite layers 13 and 17 and the electrolyte layer 14 are each formed of an electrolyte composition. However, the invention is not limited to the above embodiment. In one possible mode of the secondary battery, at least one member of the composite layers 13 and 17 and the electrolyte layer 14 may be formed of an electrolyte composition.

The above embodiment has been described, taking a lithium ion battery (secondary battery) containing an electrolyte composition as an example, to thereby illustrate the secondary battery 10 having the electrode layers (i.e., the positive electrode 11 and the negative electrode 15) and the electrolyte layer 14. However, the invention is not limited to the above embodiment. Examples of other possible secondary batteries include secondary batteries such as a lithium-sulfur battery, a lithium-oxygen battery, and a lithium-air battery, a primary battery, and an electrolytic capacitor.

REFERENCE SIGNS LIST

10 secondary battery
11 positive electrode
13,17 composite layer (electrolyte composition)
14 electrolyte layer (electrolyte composition)
15 negative electrode
18 solid electrolyte
21 electrolytic solution
22 polymer

**Claims**

1. An electrolyte composition which comprises a solid electrolyte having lithium ion conductivity and an electrolytic solution containing a lithium salt dissolved therein,
   wherein the composition further contains a particulate polymer dispersed in the electrolytic solution.

2. The electrolyte composition according to claim 1, wherein the polymer is a silicone.

3. The electrolyte composition according to claim 2, wherein the polymer contains a silicone resin on a surface thereof.

**EP 4 372 763 A1**

4. A secondary battery having a positive electrode, an electrolyte layer, and a negative electrode in that sequence,
   wherein at least one of the positive electrode, the electrolyte layer, and the negative electrode contains the electrolyte composition as recited in any one of claims 1 to 3.

FIG. 1

# FIG. 2

## FIG. 3A

## FIG. 3B

## INTERNATIONAL SEARCH REPORT

| International application No. |
| --- |
| **PCT/JP2022/027465** |

**A. CLASSIFICATION OF SUBJECT MATTER**

*H01B 1/06*(2006.01)i; *H01G 9/028*(2006.01)i; *H01G 9/035*(2006.01)i; *H01G 11/56*(2013.01)i; *H01G 11/58*(2013.01)i; *H01M 4/62*(2006.01)i; *H01M 6/18*(2006.01)i; *H01M 10/052*(2010.01)i; *H01M 10/056*(2010.01)i; *H01M 12/08*(2006.01)i
FI: H01B1/06 A; H01M10/052; H01M4/62 Z; H01M12/08 K; H01M6/18 A; H01G9/035; H01G9/028 G; H01G11/58; H01G11/56; H01M10/056

According to International Patent Classification (IPC) or to both national classification and IPC

**B. FIELDS SEARCHED**

Minimum documentation searched (classification system followed by classification symbols)

H01B1/06; H01G9/028; H01G9/035; H01G11/56; H01G11/58; H01M4/62; H01M6/18; H01M10/052; H01M10/056; H01M12/08

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | EP 3843191 A1 (LG CHEM, LTD.) 30 June 2021 (2021-06-30) paragraphs [0031]-[0032], [0042], [0047] | 1, 4 |
| Y | | 2-3 |
| Y | JP 2013-175315 A (TOYOTA INDUSTRIES CORP) 05 September 2013 (2013-09-05) paragraph [0035], fig. 1 | 2-3 |

☐ Further documents are listed in the continuation of Box C.    ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **09 September 2022** | **20 September 2022** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

INTERNATIONAL SEARCH REPORT
Information on patent family members

International application No.

**PCT/JP2022/027465**

| Patent document cited in search report | | | Publication date (day/month/year) | Patent family member(s) | | | Publication date (day/month/year) |
|---|---|---|---|---|---|---|---|
| EP | 3843191 | A1 | 30 June 2021 | JP 2021-533543 A<br>paragraphs [0033]-[0034], [0044], [0049]<br>US 2021/0288354 A1<br>WO 2020/145749 A1<br>KR 10-2020-0087093 A<br>CN 112544007 A | | | |
| JP | 2013-175315 | A | 05 September 2013 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6682708 B